# EUROPEAN PATENT SPECIFICATION

(11) **EP 1 614 595 B1**
(45) Date of publication and mention of the grant of the patent: **10.09.2008**
(21) Application number: 05013936.9
(22) Date of filing: 28.06.2005
(51) Int. Cl.: B60S 1/34

(54) **Wiper apparatus**
Wischervorrichtung
Dispositif d'essuie-glace

(30) Priority: 05.07.2004 JP 2004198575
(43) Date of publication of application: 11.01.2006
(73) Proprietor: HONDA MOTOR CO., LTD., Tokyo (JP)
(72) Inventor: Kakuta, Atsushi, Wako-shi Saitama-ken (JP); Terawaki, Masaaki, Wako-shi Saitama-ken (JP)
(74) Representative: Rupp, Christian

(56) References cited:
- FR-A- 2 099 853
- FR-A- 2 534 206
- GB-A- 1 402 577
- US-A- 2 844 838
- US-B1- 6 272 718
- US-B1- 6 453 505
- PATENT ABSTRACTS OF JAPAN vol. 2003, no. 12, 5 December 2003 (2003-12-05) -& JP 2003 300454 A (MITSUBA CORP), 21 October 2003 (2003-10-21)

## Description

### BACKGROUND OF THE INVENTION

### Field of the Invention

The present invention relates to a wiper apparatus.

### Description of Related Art

A wiper apparatus provided to a vehicle such as an automobile car has wiper arms each rotatably supported such that each of the wiper arms swings around a pivot axis. Each of the wiper arms has a wiper blade attached thereto. Each of the wiper arms has a shank which can elastically elect, and each of the wiper blades is detachably mounted to an arm piece attached to a tip end of the shank (for example, refer to Japanese Patent Application, First Publication No. 2003-300454).

Patent document US 2,844,838 A relates to a windshield wiper arm assembly, and more particularly to means for controlling the action of a spring which is associated therewith for urging the arm toward the windshields. The arm assembly comprises a tapered channel member, elongated superimposed flat bar members having their inner ends secured in the outer extremity of the channel, whereby the lower bar member is somewhat longer than the upper bar member and its inner end is provided with an aperture which receives a hocked end of a spring. The top wall of the channel is convex shaped at a portion between the pivot and the fixation of the bar members, and has rectangular shape at a portion where the bar members are secured. The arm section of the bar member is sloped with respect to the longitudinal direction of the bar member to securely receive the hocked end of the spring.
Patent document US 6 453 505 B1 discloses a wiper apparatus according to the preamble of claim 1.

The above-mentioned conventional wiper apparatus generally has the shanks each having a cross section of U-shape in order to accommodate a part of the wiper blade so as to improve appearance thereof. In the case in which the shanks are formed to have the cross section of U-shape, since the wiper apparatus directly receives wind coming from frontal side of the vehicle, there is a problem in that whistling sound increases due to edges formed on exterior of the shanks.

In addition, there is another problem in that when protruding amount of, in especially, the edges formed on upper portions of the shanks increases, the edges become conspicuous and obstacle to a driver. On the other hand, some of the shanks have a configuration in which the arm piece is attached to the shank in order to attach the wiper blade. In such a configuration, there are needs not to lose appearance continuity from the shank to the arm piece.

### SUMMARY OF THE INVENTION

In consideration of the above circumstances, an object of the present invention is to provide a wiper apparatus which can reduce whistling sound and improve the appearance thereof.

In order to achieve the above-mentioned subject, the present invention provides a wiper apparatus including: a shank having a cross section of U-shape; an arm piece joined to a joint portion formed on a tip end of the shank; a wiper blade supported by the arm piece; a chamfered portion formed at an edge on an exterior of the shank along the length direction of the shank; and a gap defined between the arm piece and a lower face of an upper wall of the shank, which is provided in the joint portion where the chamfered portion is formed.

According to the wiper apparatus of the present invention, the chamfered portion formed on the edge of the shank is extended to the joint portion which receives the arm piece, interference between the chamfered portion and the arm piece can be prevented since the arm piece is separated from the lower face of the upper wall of the shank via the gap. Therefore, the shape of the chamfered portion can be arranged such that the chamfered portion is extended without considering exist of the joint portion, and such that the chamfered portion gradually becomes narrower toward the tip end of the shank. Accordingly, the appearance quality thereof can be improved while keeping design continuity of the chamfered portion.

In addition, by extending the chamfered portion as mentioned above, the edge portion on the exterior of the shank can be shortened, and whistling sound can be prevented. In addition, annoyance to a driver caused by the edge portion seen from the inside of the vehicle also can be reduced.

The chamfered portion may have a shape in which the width thereof decreases toward the tip end of the shank.

In this case, it is possible to prevent an end of the chamfered portion being suddenly appeared and being prominent. Therefore, design continuity can be maintained; therefore, the appearance quality can be improved.

At lease two of the chamfered portions may be provided; the shank may have a design face formed between the chamfered portions; and the width of the design face may be set substantially equal to the width of the arm piece.

In this case, it is possible to form a continuous appearance from the design face of the shank to the arm piece. Therefore, design continuity from the arm piece to the shank can be ensured; therefore, the appearance quality can be improved.

### BRIEF DESCRIPTION OF THE DRAWINGS

FIG. 1 is a frontal perspective view of a vehicle equipped with a wiper apparatuses according to an embodiment of the present invention.
FIG. 2 is an exploded view of a first wiper apparatus.
FIG. 3 is an exploded side view of the first wiper apparatus.
FIG. 4 is a perspective top view of the first wiper apparatus.
FIG. 5 is a cross-sectional view taken along the line A-A of FIG. 4.
FIG. 6 is a view from a direction of arrow B of FIG. 3.

### DETAILED DESCRIPTION OF THE INVENTION

An embodiment of a wiper apparatus according to the present invention will be explained below with reference to the figures.

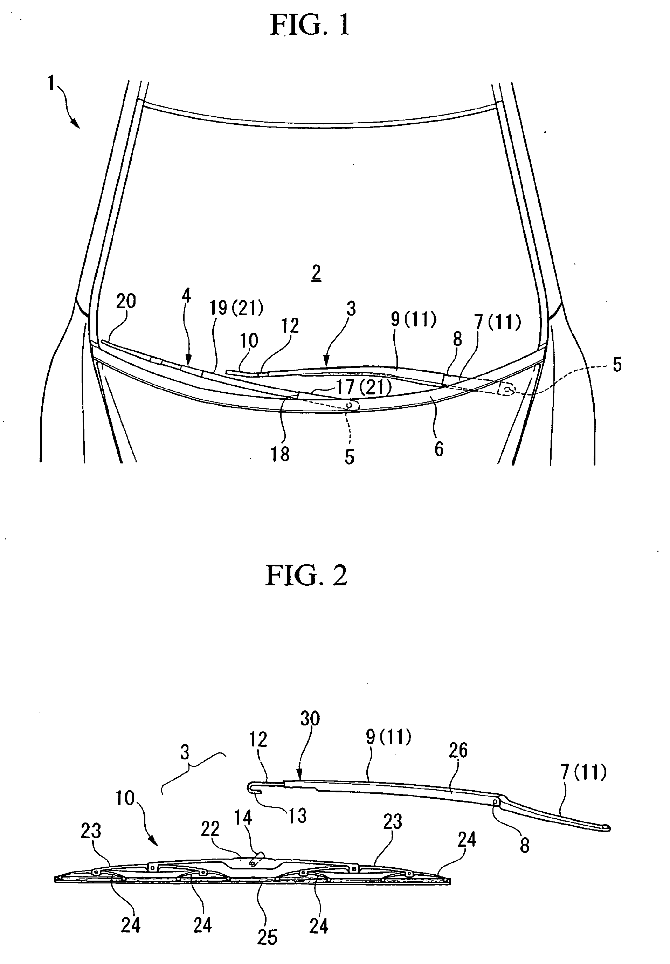

As shown in FIG. 1, a vehicle 1 is equipped with a pair of wiper apparatuses 3 and 4 for wiping a frontal window glass 2. The wiper apparatus 3 is joined to a pivot shaft 5 which can be rotated by a driving unit not shown in the figures; and the other wiper apparatus 4 is joined to another pivot shaft 5 which can also be rotated by the driving unit. The pivot shaft 5 for the wiper apparatus 3 (a first wiper apparatus 3 hereinafter) positioned on the left side of the vehicle is protruded from a cowl top garnish provided at bottom of the frontal window glass 2 along the vehicle width direction.

An arm base portion 7 is joined to the pivot shaft 5. In addition, a shank 9 is supported by the arm base portion 7 via a hinge portion 8 such that the shank 9 can elastically elect. Furthermore, a wiper blade 10 is supported by a tip end of the shank 9 such that the wiper blade 10 can swing. A wiper arm 11 of the first wiper apparatus 3 is equipped with the arm base portion 7 and the shank 9.

The wiper apparatus 4 (a second wiper apparatus 4 hereinafter), as same as the first wiper apparatus 3, has an arm base portion 17 joined to the another pivot shaft 5 which is protruded from the cowl top garnish 6. Furthermore, a shank 19 is supported by the arm base portion 17 via a hinge portion 18 such that the shank 19 can elastically elect. Furthermore, a wiper blade 20 is supported by a tip end of the shank 19 such that the wiper blade 20 can swing. A wiper arm 21 of the second wiper apparatus 4 is equipped with the arm base portion 17 and the shank 19. Except for the point that the wiper arms 11 and 21 have different shapes each other, the first wiper apparatus 3 and the second wiper apparatus 4 are the same in the point that each of them is equipped with: one of the shanks 9 and 19 having the same configuration each other; and one of the wiper blades 10 and 20 having the same configuration each other. Therefore, the first wiper apparatus 3 will be explained below as an example.

As shown in FIG. 2, an arm piece 12 to be explained later is joined to a tip end of the shank 9 of the first wiper apparatus 3 by caulking. The wiper blade 10 having tournament shape is detachably attached to a tip end of the arm piece 12. The wiper blade 10 is equipped with: a primary arm 22 having an engaging portion 14 which is swingingly joined to the primary arm 22, and engages with a U-shaped portion 13 formed at the tip end of the arm piece 12; a pair of secondary arms 23 each supported by a pin at each end of the primary arm 22 such that each of the secondary arms 23 can swing about the pin; and four yokes 24 each supported by another pin at each of the secondary arms 23 such that each of the yokes 24 can swing about other pin. In addition, a blade body 25 is attached to each end of the yokes 24.

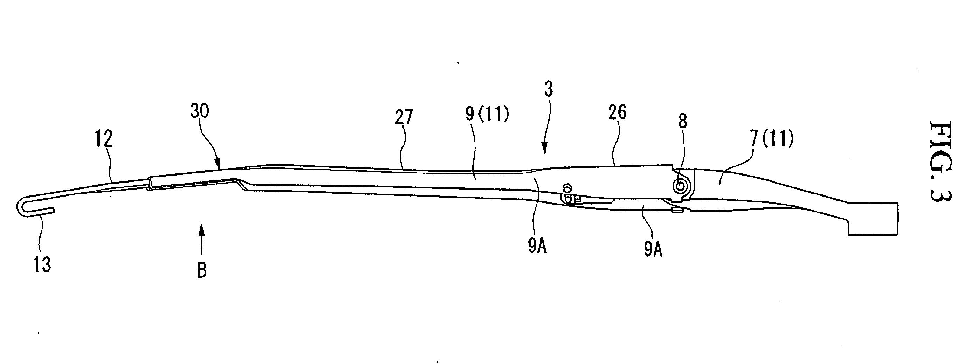

As shown in FIGS. 3 to 6, the shank 9 of the first wiper apparatus 3 is a metal element having a cross section of U-shape and an external shape becoming narrower toward its tip end. A chamfered portion 27 is formed at each edge 26 on an exterior of the shank 9 along the length direction of the shank 9. The pair of chamfered portions 27 are formed from a position near a joint portion with the arm base portion 7 to a position on a joint portion 30 (to be explained below) provided to the tip end of the shank 9. Each of the chamfered portions 27 is formed such that width thereof gradually decreases toward the tip end of the shank 9.

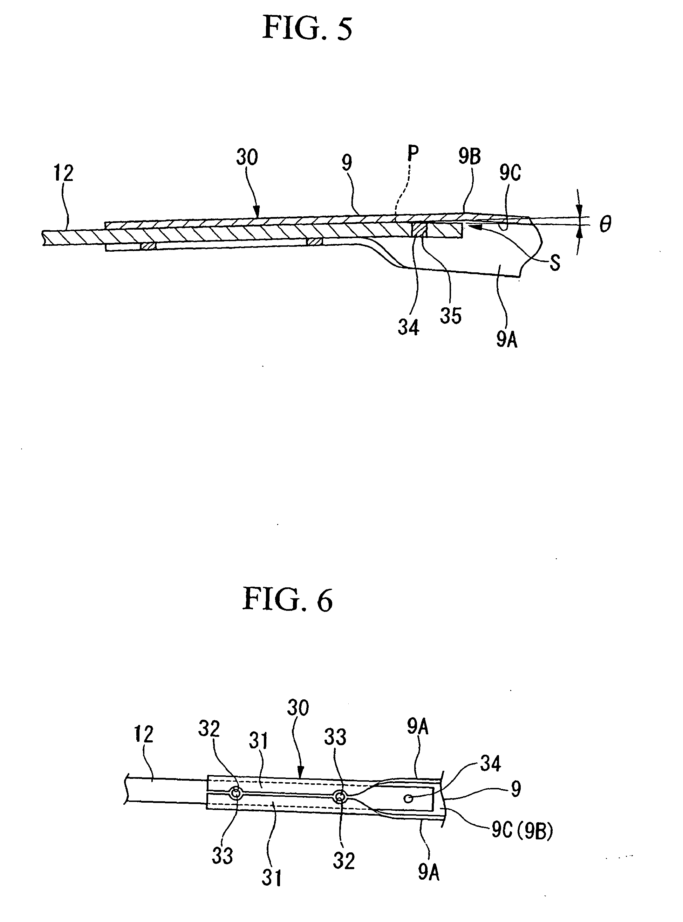

The joint part 30 for receiving the arm piece 12 is formed at the tip end of the shank 9. As shown in FIG. 6, the joint part 30 is a portion which surrounds the arm piece 12 from a top to a bottom of the arm piece 12. The joint part 30 receives the arm piece 12 by extending both side walls 9A to surround the arm piece 12.

The arm piece 12 is made of a thick metal plate, and has the U-shaped portion 13 for engaging with the engage portion 14 of the wiper blade 10.

As shown in FIG. 6, at the joint portion 30 of the shank 9, two notches 32 are formed at a position where surrounding portions 31 each formed by extending the side walls 9A join each other. The arm piece 12 is fixed to the joint portion 30 of the shank 9 by inserting pins 32 into each notch 32 and caulking the pins 32 with the surrounding portions 31.

On the other hand, a positioning pin 34 is provided at a position close to the joint portion 30 on a lower face 9C of a top wall 9B of the shank 9. The arm piece 12 has a positioning hole 35 formed at a position corresponding to a position of the positioning pin 34. When caulking the arm piece 12 with the surrounding portions 31, positioning of the arm piece 12 with respect to the shank 9 is performed by inserting the positioning pin 34 of the shank 9 into the positioning hole 35 of the arm piece 12.

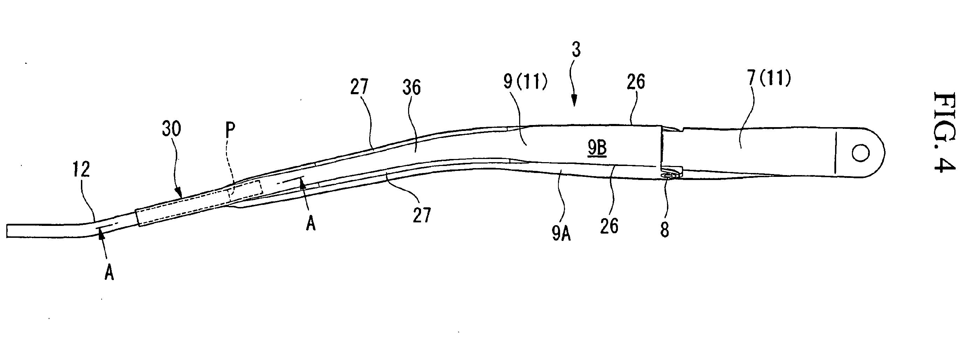

The chamfered portions 27 are formed toward the joint portion 30 of the shank 9. And, at a portion on an exterior of the shank 9 where these chamfered portions 27 are formed along each of the edges 26, the arm piece 12 is mounted to the shank 9 such that the shank 9 departs from the lower face 9C of the top wall 9B of the shank 9. In specifically, as shown in FIGS. 4 and 5, the arm piece 12 is mounted such that the arm piece 12 branches off the lower face 9C of the top wall 9B of the shank 9 at a bending point P, and thereby forming an angle θ (for example, 3 degrees) between an upper face of the arm piece 12 and the lower face 9C. With this configuration, a gap S is defined between the upper face of the arm piece 12 and the lower face 9C. Each of the chamfered portions 27 is formed toward a position where the arm piece 12 is departed from the lower face 9C.

As shown in FIG. 4, the shank 9 has a design face 36 between the pair of the chamfered portions 27. The design face 36 has substantially the same width as of the arm piece 12.

As explained above, in the wiper apparatus 3 of the present embodiment, the arm piece 12 is mounted to the shank 9 such that the arm piece 12 departs from the lower face 9C of the top wall 9B of the shank 9 at the position where the chamfered portions 27 are formed along the edges 26 on the exterior of the joint portion 30 of the shank 9. With this configuration, even when the chamfered portions 27 are extended to the position of the joint portion 30 which receives the arm piece 12, it is possible to prevent interference between the chamfered portions 27 and the arm piece 12. Therefore, the chamfered portions 27 can be extended such that they gradually become narrower towards the tip end of the shank 9 without being interrupted by the joint portion 30. Accordingly, design continuity of the chamfered portions 27 along the length direction of the shank 9 can be maintained; and the appearance quality thereof can be improved.

In addition, by extending the chamfered portions 27 as mentioned above, the edge portions 26 remaining on the exterior of the shank 9 can be shortened, and whistling sound can be prevented. In addition, annoyance to a driver caused by the edge portions 26 seen from the inside of the vehicle 1 also can be reduced.

In addition, since each of the chamfered portions 27 has a shape in which the width thereof decreases toward the tip end of the shank 9, it is possible to prevent the chamfered portions 27 being suddenly disappeared and an end portion thereof being prominent. Therefore, design continuity can be maintained, and thereby the appearance quality can be improved.

Since the shank 9 has the design face 36 formed between the pair of chamfered portions 27, and since the width of the design face 36 is set substantially equal to the width of the arm piece 12, it is possible to form a continuous appearance from the design face 37 of the shank 9 to the arm piece 12. Therefore, design continuity from the arm piece 12 to the shank 9 can be formed; and thereby increasing the appearance quality.

While preferred embodiment of the invention has been described and illustrated above, it should be understood that this is exemplary of the invention and is not to be considered as limiting.

## Claims

1. A wiper apparatus comprising:
a shank (9) having a cross section of U-shape;
an arm piece (12) joint to a joint portion (30) formed on a tip end of the shank (9);
a wiper blade (10) supported by the arm piece (12),
a chamfered portion (27) formed at an edge (26) on an exterior of the shank (9) along the length direction of the shank; the wiper apparatus **characterized by** said chamfered portion (27) being extended to the joint portion (30); and
a gap (S) defined between the arm piece (12) and a lower face (9C) of an upper wall (9B) of the shank, which is provided in the joint portion (30) where the chamfered portion (27) is formed.

2. The wiper apparatus according to claim 1, wherein:
the chamfered portion (27) has a shape in which the width thereof decreases toward the tip end of the shank (9); and
the arm piece (12) is attached to the shank (9) such that the shank (9) departs from the lower face (9C) of the upper wall (9B) of the shank (9) forming a predetermined angle (θ) between the arm piece (12) and the lower face (9C).

3. The wiper apparatus according to one of claims 1 and 2, wherein:
at least two of the chamfered portions (27, 27) are provided;
the shank (9) has a design face (36) formed between the chamfered portions (27, 27); and
the width of the design face (36) is set substantially equal to the width of the arm piece (12).

## Patentansprüche

1. Wischervorrichtung, umfassend:
einen Schaft (9) mit einem U-förmigen Querschnitt;
ein Armstück (12), das mit einem Verbindungsteil (30) verbunden ist, das an einer Endspitze des Schafts (9) ausgebildet ist;
ein Wischerblatt (10), das durch das Armstück (12) gehalten wird,
einen abgeschrägten Teil (27), der an einer Kante (26) an einer Außenseite des Schafts (9) entlang der Längsrichtung des Schafts ausgebildet ist;
wobei die Wischervorrichtung **gekennzeichnet ist durch** den sich zum Verbindungsteil (30) erstreckenden abgeschrägten Teil (27); und
einen Spalt (S), der zwischen dem Armstück (12) und einer Unterseite (9C) einer oberen Wand (9B) des Schafts vorgegeben ist, der in dem Verbindungsteil (30) bereitgestellt ist, wo der abgeschrägte Teil (27) ausgebildet ist.

2. Wischervorrichtung gemäß Anspruch 1, worin:
der abgeschrägte Teil (27) eine Form aufweist, bei der die Breite hiervon in Richtung der Endspitze des Schafts (9) abnimmt; und
das Armstück (12) an dem Schaft (9) derart befestigt ist, dass sich der Schaft (9) von der Unterseite (9C) der oberen Wand (9B) des Schafts (9) entfernt, wodurch ein vorherbestimmter Winkel (θ) zwischen dem Armstück (12) und der Unterseite (9C) gebildet wird.

3. Wischervorrichtung gemäß einem der Ansprüche 1 oder 2, worin:
wenigstens zwei abgeschrägte Teile (27, 27) bereitgestellt sind;
der Schaft (9) eine Konstruktionsfläche (36) aufweist, die zwischen den abgeschrägten Teilen (27, 27) ausgebildet ist; und
die Breite der Konstruktionsfläche (36) im Wesentlichen gleich der Breite des Armstücks (12) festgelegt ist.

## Revendications

1. Dispositif d'essuie-glace comprenant :
une tige (9) ayant une section en U ;
un élément de bras (12) joint à une partie de jonction (30) formée sur une extrémité terminale de la tige (9) ;
un balai d'essuie-glace (10) supporté par l'élément de bras (12),
une partie chanfreinée (27) formée au niveau d'un bord (26) sur l'extérieur de la tige (9) le long de la direction de longueur de la tige ; le dispositif d'essuie-glace étant **caractérisé en ce que** ladite partie chanfreinée (27) s'étend vers la partie de jonction (30) ; et
un espace (S) défini entre l'élément de bras (12) et une face inférieure (9C) d'une paroi supérieure (9B) de la tige, qui est prévu dans la partie de jonction (30) où la partie chanfreinée (27) est formée.

2. Dispositif d'essuie-glace selon la revendication 1, dans lequel :
la partie chanfreinée (27) a une forme dans laquelle la largeur de celle-ci diminue vers l'extrémité terminale de la tige (9) ; et
l'élément de bras (12) est fixé à la tige (9) de sorte que la tige (9) parte de la face inférieure (9C) de la paroi supérieure (9B) de la tige (9) formant un angle prédéterminé (θ) entre l'élément de bras (12) et la face inférieure (9C).

3. Dispositif d'essuie-glace selon l'une des revendications 1 et 2, dans lequel :
au moins deux des parties chanfreinées (27, 27) sont prévues ;
la tige (9) a une face de conception (36) formée entre les parties chanfreinées (27, 27) ; et
la largeur de la face de conception (36) est fixée sensiblement égale à la largeur de l'élément de bras (12).
